# EUROPÄISCHE PATENTSCHRIFT

(11) **EP 4 096 868 B1**
(45) Veröffentlichungstag und Bekanntmachung des Hinweises auf die Patenterteilung: **27.03.2024**
(21) Anmeldenummer: 21700563.6
(22) Anmeldetag: 13.01.2021
(51) Int. Cl.: B25B 1/10, B25B 1/18, B23Q 3/06, B25B 21/02

(54) **SPANNVORRICHTUNG ZUM EINSPANNEN EINES WERKSTÜCKS**
CLAMPING DEVICE FOR CLAMPING A WORKPIECE
DISPOSITIF DE SERRAGE PERMETTANT DE SERRER UNE PIÈCE À TRAVAILLER

(30) Priorität: 31.01.2020 AT 312020
(43) Veröffentlichungstag der Anmeldung: 07.12.2022
(73) Patentinhaber: Andreas Maier GmbH & Co. KG, 70734 Fellbach (DE)
(72) Erfinder: EGGER, Remo, 6942 Langenegg (AT)
(74) Vertreter: Hoeger, Stellrecht & Partner Patentanwälte mbB
(86) Internationale Anmeldenummer: PCT/EP2021/050568
(87) Internationale Veröffentlichungsnummer: WO 2021/151668

(56) Entgegenhaltungen:
- EP-A1- 1 920 887
- AT-B1- 521 254

## Beschreibung

Die Erfindung bezieht sich auf eine Spannvorrichtung zum Einspannen eines Werkstücks, umfassend eine drehbar und axial unverschiebbar gelagerte Spindel mit einem ein Gewinde aufweisenden Gewindeabschnitt, einen einen Rotor aufweisenden Antriebsmotor zum Drehen der Spindel, und eine mit dem Gewinde der Spindel zusammenwirkende, unverdrehbare gehaltene Spindelmutter, wobei durch Drehung der Spindel ein mit der Spindelmutter verbundenes oder an die Spindelmutter angeformtes Spannelement zum Einspannen des Werkstücks verstellbar ist.

Spannvorrichtungen dienen zur Lagefixierung eines Werkstücks, beispielsweise um dieses gegen bei der Fertigung auftretende Prozesskräfte zu halten und/oder von einem Bearbeitungsplatz zum nächsten zu überführen.

Aus der AT 521 254 B1 ist eine Spannvorrichtung zum Einspannen eines Einzugnippels bekannt, wobei die Spannvorrichtung ein Spannelement umfasst, welches von einem Antriebsmotor über ein Schraubgetriebe zwischen einer Offenstellung, in der der Einzugnippel in eine Aufnahmeöffnung der Spannvorrichtung einführbar und aus dieser herausziehbar ist, und einer Spannstellung, in welcher der in der Aufnahmeöffnung eingeführte Einzugsnippel in dieser gehalten ist, axial verstellbar ist, wobei die Spannvorrichtung eine Impulseinheit mit einem mit dem Rotor des Antriebsmotors mechanisch gekoppelten Drehteil aufweist, von welchem zur axialen Verstellung des Spannelements über das Schraubgetriebe pro Umdrehung zumindest einmal ein Drehimpuls auf ein Impulsaufnahmeteil der Impulseinheit übertragbar ist.

Bekannt sind Spannsysteme, bei denen ein Einzugsnippel, welcher am Werkstück angebracht ist, von einer Spannvorrichtung gehalten wird (bei einer Nullpunkt-Spannvorrichtung in Bezug auf drei Achsen, bei einer "Z-Fixierung" in Bezug auf eine Achse). Solche Spannvorrichtungen weisen eine Aufnahmeöffnung zum Einführen des Einzugsnippels auf. In einer Spannstellung der Spannvorrichtung ist der Einzugsnippel in der Aufnahmeöffnung gehalten, indem Eingriffselemente, beispielsweise Spannkugeln, in eine Ringnut des Einzugsnippels eingreifen und gegen diese verspannt sind. Ein solcher Einzugsnippel kann direkt am zu bearbeitenden Werkstück angebracht sein oder an einem das Werkstück tragenden Träger. Aufgrund der definierten Maße und der Ausbildung des Einzugsnippels ist zum Öffnen und Schließen der Spannvorrichtung nur eine geringe axiale Verstellung eines Spannelements erforderlich. Eine solche Spannvorrichtung geht z.B. aus der WO 2014/044390 A1 hervor.

Eine weitere solche Spannvorrichtung geht aus der AT 521 254 B1 hervor. Diese weist eine Impulseinheit auf, deren Drehteil mit dem Antriebsmotor mechanisch gekoppelt ist und mittels der beim Schließen der Spannvorrichtung unter Zwischenschaltung eines Schraubgetriebes die in Form von Spannkugeln ausgebildeten Eingriffselemente mit der Ringnut des Einzugsnippels in Eingriff gebracht werden. Bei Spannvorrichtungen zum Einspannen eines Einzugsnippels wird wie bereits erwähnt von der Spannvorrichtung nur ein geringer Spannhub durchgeführt.

Impulseinheiten zur intermittierenden Drehimpulsübertragung sind in unterschiedlicher Ausführung bekannt und werden herkömmlicherweise in Impulsschraubern oder Schlagschraubern eingesetzt. Impulsschrauber mit hydraulischer Drehimpulsübertragung gehen beispielsweise aus der EP 1 502 707 A2, DE 10 2007 045 695 A1 und EP 1 920 887 A1 hervor. Aus der DE 43 43 582 A1 geht ein Impulsschlagwerk insbesondere für einen Impulsschrauber hervor, wobei eine Drehimpulsübertragung vom Drehteil auf das Impulsaufnahmeteil mechanisch erfolgt. Das Impulsaufnahmeteil weist hierbei einen in einem Ölbad gegen die Kraft einer Rückstellfeder radial verschiebbaren Hubkolben auf, gegen welchen das Drehteil anläuft.

Bekannt sind im Weiteren Spannvorrichtungen, bei welchen eine Spindelmutter auf dem Gewinde einer drehbaren und axial unverschiebbar gelagerten Spindel angeordnet ist. Durch Drehung der Spindel wird die Spindelmutter axial verstellt, wodurch ein Spannelement zum Einspannen eines Werkstücks verstellbar ist. Es können hier relativ große axiale Verstellwege erreicht werden. Solche Spannvorrichtungen werden auch als Linear-Spannvorrichtungen bezeichnet. Beispielsweise kann eine solche Spannvorrichtung nach Art eines Schraubstocks, also mit einer feststehenden Spannbacke und einer linear verschiebbaren Spannbacke ausgebildet sein.

Eine motorisch verstellbare Spannvorrichtung der eingangs genannten Art geht aus der EP 0 134 819 hervor. Von der Spindelmutter wird hier ein Stößel axial verstellt und diese axiale Bewegung des Stößels wird zum Öffnen und Schließen einer Spannzange eingesetzt.

Manuell angetriebene Spannvorrichtungen mit auf einer Spindel angeordneten, axial verstellbaren Spindelmuttern gehen aus der EP 0 460 457 B2 und EP 0 463 344 B1 hervor.

Aufgabe der Erfindung ist es eine vorteilhafte Spannvorrichtung der eingangs genannten Art bereitzustellen, mit welcher über den gesamten Spannweg, über welchen das Spannelement verstellbar ist, eine hohe Spannkraft aufbringbar ist. Erfindungsgemäß gelingt dies durch eine Spannvorrichtung mit den Merkmalen des Anspruchs 1.

Die Spannvorrichtung gemäß der Erfindung weist eine Impulseinheit mit einem Drehteil auf, welches mit dem Rotor des Antriebsmotors mechanisch gekoppelt ist. Von der Impulseinheit ist pro Umdrehung des Drehteils zumindest einmal ein Drehimpuls auf die Spindel übertragbar, um die Spindel zu drehen.

Die Drehimpulsübertragung von der Impulseinheit auf die Spindel erfolgt also nicht kontinuierlich sondern intermittierend. Mit anderen Worten wird durch die durch den Antriebsmotor angetriebene kontinuierliche Drehung des Drehteils der Impulseinheit von der Impulseinheit intermittierend ein Drehmoment auf ein drehfest mit der Spindel verbundenes oder an der Spindel angeformtes Impulsaufnahmeteil ausgeübt. Pro Umdrehung des Drehteils wird also mindestens einmal über einen Bereich des Drehwinkels des Drehteils, welcher kleiner als 90° ist, ein Drehmoment auf das Impulsaufnahmeteil ausgeübt, während über einen anderen Bereich des Drehwinkels des Drehteils kein Drehmoment auf das Impulsaufnahmeteil ausgeübt wird.

In einer vorteilhaften Ausführungsform kann die Drehimpulsübertragung mechanisch über zwei aneinander anlaufende Anschlagflächen erfolgen. Bei der Impulseinheit handelt es sich hierbei also um ein Schlagwerk, welches zumindest ein Schlagteil aufweist, von dem pro Umdrehung des Drehteils zumindest ein Schlag auf ein mit der Spindel drehfest verbundenes oder an diese angeformtes Impulsaufnahmeteil ausübbar ist. Bei diesem Impulsaufnahmeteil kann es sich beispielsweise um einen an der Spindel angeformten Schlagnocken handeln.

In einer anderen möglichen Ausführungsform erfolgt die Drehimpulsübertragung durch die Impulseinheit hydraulisch. Insbesondere weist die Impulseinheit gemäß dieser Ausführungsform einen zwischen dem Drehteil und einem drehfest mit der Spindel verbundenen oder an der Spindel angeformten Impulsaufnahmeteil einen Spaltraum auf, in welchem sich eine Hydraulikflüssigkeit befindet, wobei sich die Spaltbreite zwischen dem Drehteil und dem Impulsaufnahmeteil über den Umfang des Spaltraums ändert. Zur Abdichtung des Spaltraums in umfänglicher Richtung ist vorteilhafterweise mindestens ein Dichtelement, beispielsweise in Form einer Leiste, vorgesehen.

Durch die erfindungsgemäße Ausbildung kann in effektiver Weise eine hohe Spannkraft aufgebracht werden. Als Antriebsmotor kann in einer möglichen Ausführungsform der Erfindung ein Elektromotor eingesetzt werden. Insbesondere kann es sich um einen Innenläufermotor handeln. Ein solcher kann vorzugsweise bürstenlos ausgebildet sein. Der Rotor kann hierbei günstigerweise Permanentmagneten aufweisen. In einer anderen möglichen Ausführungsform der Erfindung kann ein Pneumatikmotor eingesetzt werden.

Der Rotor des Antriebsmotors ist mit dem Drehteil der Impulseinheit vorzugsweise über ein aus einem elastomeren Material bestehendes Kupplungsteil verbunden. Es können dadurch Impulsschläge der Impulseinheit gegenüber dem Antriebsmotor abgedämpft werden. Es wird hierbei eine einfache aber dennoch robuste Ausbildung ermöglicht.

Der Rotor des Antriebsmotors weist vorteilhafterweise einen axial in Richtung zur Spindelmutter offenen Hohlraum auf, in welchem die Impulseinheit zumindest über einen Abschnitt ihrer axialen Erstreckung aufgenommen ist. Es wird dadurch eine axial kompakte Ausbildung ermöglicht.

Zur Erfassung der axialen Lage der Spindelmutter und somit der Lage des Spannelements kann günstigerweise eine Sensorscheibe vorgesehen sein, die drehfest mit der Spindel verbunden ist.

Eine erfindungsgemäße Spannvorrichtung kann beispielsweise nach Art eines Schraubstocks ausgebildet sein. Das Spannelement kann somit eine bewegliche Spannbacke aufweisen und mit einer feststehenden Spannbacke zusammenwirken. In einer anderen möglichen Ausbildungsform kann die Spannvorrichtung ein stößelartiges Spannelement aufweisen, mit welchem ein Werkstück gegen eine Spannfläche gespannt werden kann, welche insbesondere nicht Teil der Spannvorrichtung selbst ist. Eine solche Ausbildung kann bezüglich des Einsatzbereichs derjenigen eines Spannzylinders entsprechen.

Weitere Vorteile und Einzelheiten der Erfindung werden im Folgenden anhand der beiliegenden Zeichnung erläutert. In dieser zeigen:
- Fig. 1: eine Schrägsicht einer Spannvorrichtung gemäß einem Ausführungsbeispiel der Erfindung, nach Art eines Schraubstocks;
- Fig. 2: eine Draufsicht mit eingespanntem Werkstück;
- Fig. 3: einen Schnitt entlang der Linie BB von Fig. 2;
- Fig. 4: einen Schnitt entlang der Linie AA von Fig. 2;
- Fig. 5: eine Schrägsicht aus einem gegenüber Fig. 1 unterschiedlichen Blickwinkel, mit eingespanntem Werkstück, ein Teil der Vorrichtung als Explosionsdarstellung dargestellt;
- Fig. 6: eine Explosionsdarstellung der Impulseinheit;
- Fig. 7: eine Explosionsdarstellung des Rotors;
- Fig. 8: eine Schrägsicht einer Spannvorrichtung gemäß einem zweiten Ausführungsbeispiel der Erfindung;
- Fig. 9: eine Draufsicht;
- Fig. 10: einen Schnitt entlang der Linie DD von Fig. 9;
- Fig. 11: einen Schnitt entlang der Linie CC von Fig. 9;
- Fig. 12: eine Schrägsicht aus einem gegenüber Fig. 8 unterschiedlichen Blickwinkel, Teile der Vorrichtung in Explosionsdarstellung dargestellt;
- Fig. 13: ein drittes Ausführungsbeispiel der Erfindung, teilweise im Längsmittelschnitt dargestellt;
- Fig. 14: eine Explosionsdarstellung der Impulseinheit gemäß diesem Ausführungsbeispiel der Erfindung;
- Fig. 15: einen Querschnitt entlang der Linie EE von Fig. 13.

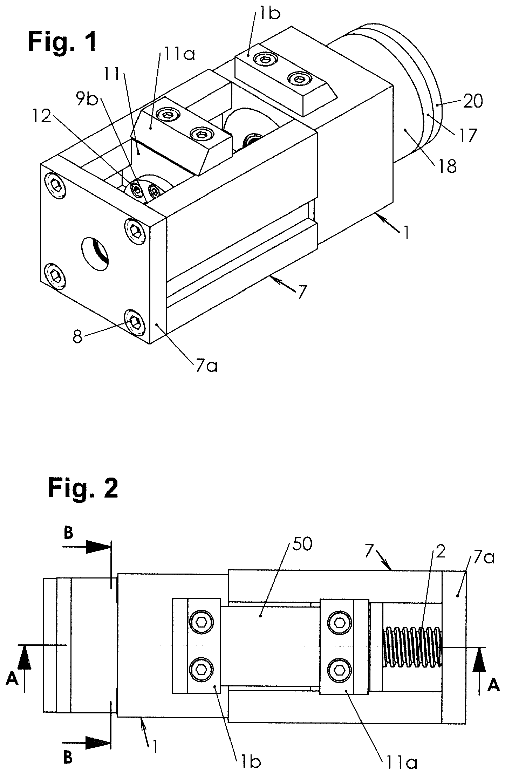

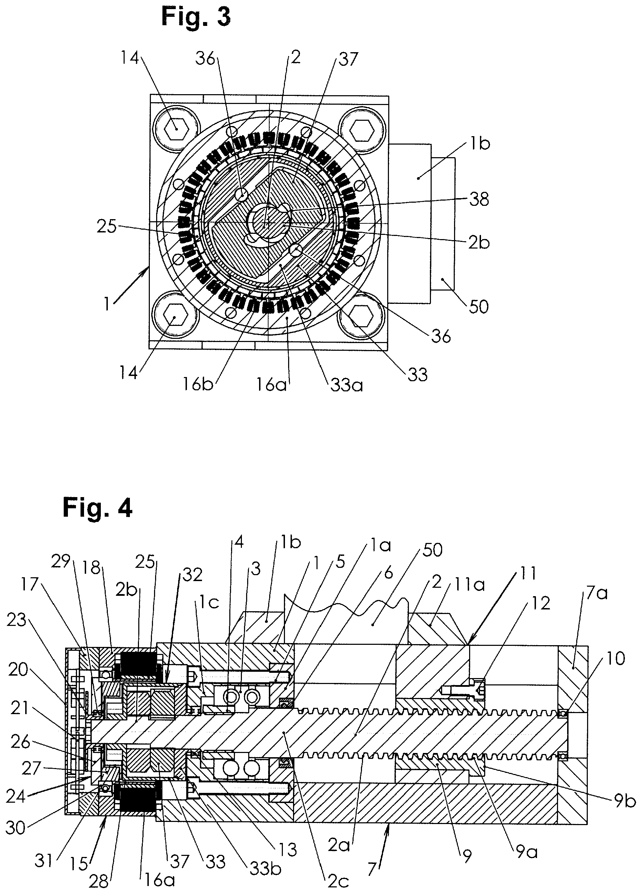

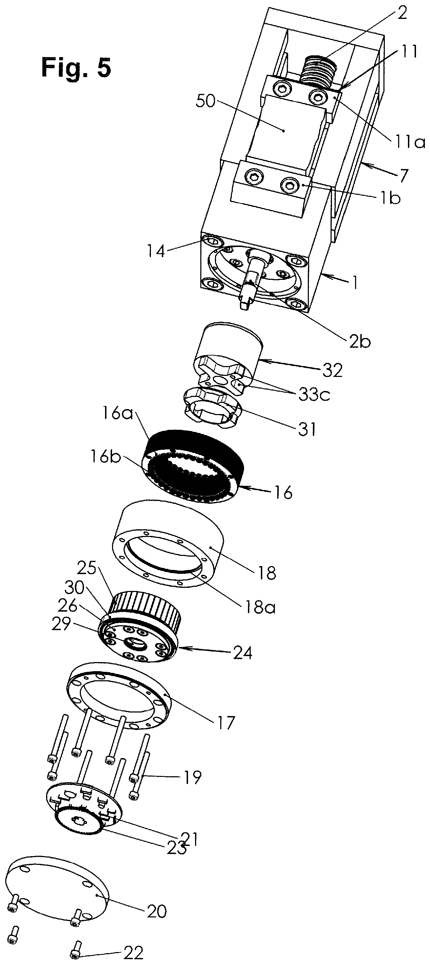

Ein erstes Ausführungsbeispiel einer Spannvorrichtung gemäß der Erfindung wird im Folgenden anhand der Fig. 1 bis 7 erläutert.

Die Spannvorrichtung weist eine in einem Lagergehäuse 1 drehbar und axial unverschiebbar gelagerte Spindel 2 auf. Zur drehbaren und axial unverschiebbaren Lagerung der Spindel 2 dient ein Schub-Drucklager 3, von dem ein mittlerer Lagerring mittels einer auf ein Außengewinde der Spindel aufgeschraubten Fixiermutter 4 gegen eine Stufe der Spindel verspannt ist und von dem beidseitig des mittleren Lagerrings liegende Lagerringe an einem Boden 1c eines Basisteils des Gehäuses 1 und an einem mit dem Basisteil durch Verschraubung verbundenen Deckel 1a des Gehäuses 1 abgestützt sind. Ein Abschnitt der Spindel 2, an welchem der Antrieb der Spindel 2 erfolgt, ragt durch den Boden 1c des Lagergehäuses 1 aus dem Lagergehäuse heraus und ein gegenüberliegender Abschnitt der Spindel, der ein Gewinde 2a aufweist, auf welches die Spindelmutter 9 aufgeschraubt ist, ragt durch eine Öffnung im Deckel 1a aus dem Lagergehäuse 1 heraus. Zwischen dem Deckel 1a und der Spindel 2 befindet sich vorteilhafterweise eine Dichtung 6. Der Deckel 1a ist mit dem Basisteil des Gehäuses 1 mittels Schrauben 5 verschraubt.

Die Spindelmutter 9 weist also ein Gewinde 9a in Form eines Innengewindes auf, welches mit dem in Form eines Außengewindes ausgebildeten Gewinde 2a der Spindel 2 in Eingriff steht.

Mit der Spindelmutter 9 ist ein Spannelement 11 starr verbunden. Im Ausführungsbeispiel ist das Spannelement 11 auf der Spindelmutter 9 angeordnet, wobei die Spindelmutter 9 einen Flansch 9b aufweist, der mit dem Spannelement 11 verschraubt ist. Auch eine andere Verbindung zwischen der Spindelmutter 9 und dem Spannelement 11 oder eine einstückige Ausbildung (also durchgehend aus dem gleichen Material, sodass das Spannelement 11 also an die Spindelmutter 9 angeformt ist) ist denkbar und möglich.

Das Spannelement 11 ist vom Führungsgehäuse 7 längsverschiebbar geführt, aber gegen eine Verdrehung gesichert. Somit ist auch die Spindelmutter 9 verdrehgesichert.

Das Führungsgehäuse 7 ist mittels Schrauben 14 starr mit dem Lagergehäuse 1 verbunden.

Das Spannelement 11 weist eine Spannbacke 11a auf. Durch Drehung der Spindel 2 um ihre Längsachse 2c kann die Spindelmutter 9 und somit das Spannelement 11 axial verstellt werden. Es kann dadurch ein Werkstück 50 zwischen der axial verstellbaren Spannbacke 11a und einer feststehenden Spannbacke 1b, die am Lagergehäuse 1 angeformt ist, geklemmt werden.

Im Ausführungsbeispiel ist die Spannvorrichtung somit nach Art eines Schraubstocks ausgebildet.

Zur drehbaren Lagerung der Spindel 2 dienen im Weiteren Lager 10, 13, welche die Spindel 2 radial lagern. Das Lager 13 ist im Boden des Lagergehäuses 1 angeordnet, das Lager 10 ist im Boden 7a des Führungsgehäuses 7 angeordnet und wirkt mit dem Ende des aus dem Boden 1a des Lagergehäuses 1 herausragenden Abschnitts der Spindel 2 zusammen.

Eine drehbare, aber axial unverschiebbare Lagerung der Spindel 2 könnte auch in modifizierter Weise ausgebildet sein.

Um die Spindel 2 um ihre Längsachse 2c zu drehen, dient ein Antriebsmotor 15. Dieser wirkt auf die Spindel 2 über eine Impulseinheit 32 ein, welche weiter unten genauer erläutert wird.

Der Antriebsmotor 15 weist einen Stator 16 und einen innenliegenden Rotor 24 auf. Der Stator 16 weist ein Statorblech 16a (bzw. ein Blechpaket) und eine Statorwicklung 16b und ein diese umgebendes Gehäuse 18 auf.

Der Rotor 24 weist Permanentmagneten 25 auf, die von einem Magnettragring 28 getragen sind, und ist mittels Lagern 29, 30 drehbar gelagert.

Es handelt sich beim Antriebsmotor 15 somit um einen bürstenlosen Innenläufermotor.

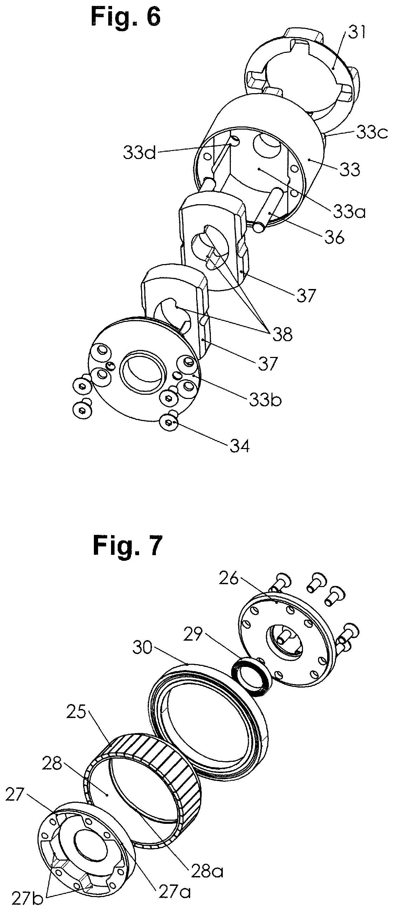

Der Magnettragring 28 besitzt einen radial nach innen vorspringen Absatz 28a. An diesem stützt sich ein nach außen vorstehender Ringbund 27a einer Mitnahmescheibe 27 axial ab. Die Mitnahmescheibe 27 ist mit einer Klemmscheibe 26 verschraubt (die Schrauben sind in Fig. 7 nicht bezeichnet). Zwischen der Klemmscheibe und dem Mitnahmering 27 ist der Außenring des Lagers 29 geklemmt und zwischen der Klemmscheibe 26 und dem Magnettragring 28 ist der Innenring des Lagers 30 geklemmt. Der Außenring des Lagers 30 stützt sich am Statorgehäuse 18 ab. Der Innenring des Lagers 29 ist durch die Spindel 2 abgestützt, im Ausführungsbeispiel ist der Innenring des Lagers 29 auf einem axialen Ansatz der Sensorscheibe 23 angeordnet, über welchen diese auf der Spindel 2 befestigt ist.

Der Außenring des Lagers 30 ist zwischen einem nach innen hervorspringenden Absatz 18a des Statorgehäuses 18 und einem Klemmring 17 geklemmt, welcher mittels Schrauben 19 am Lagergehäuse 1 angeschraubt ist, wobei das Statorgehäuse 18 zwischen dem Klemmring 17 und dem Lagergehäuse 1 liegt.

Der Magnettragring 28 mit dem Permanentmagneten 25 ragt somit axial über die Mitnahmescheibe 27 und bildet einen axial in Richtung zur Spindelmutter 9 hin offenen Hohlraum. In diesem ist die noch zu beschreibende Impulseinheit 32 über einen Abschnitt ihrer axialen Erstreckung aufgenommen. Der Antriebsmotor 15 und die Impulseinheit 32 sind also axial "ineinandergeschachtelt", wodurch eine axial kompakte Baulänge der Klemmvorrichtung ermöglicht wird.

Die auf dem aus dem Antriebsmotor 15 herausragenden Ende der Spindel 2 angeordnete Sensorscheibe 23 dient zur Erfassung der Drehung der Spindel. Die Sensorscheibe 23, welche sich mit der Spindel 2 mitdreht, wirkt hierzu mit einer Steuerelektronik 21 zusammen, die der Sensorscheibe 23 gegenüberliegt. Die Steuerelektronik und die Sensorscheibe sind durch einen Deckel 20 abgedeckt, welcher mittels Schrauben 22 am Klemmring 17 angeschraubt ist.

Die Mitnahmescheibe 27 weist Mitnahmeelemente 27b auf, die mit korrespondierend ausgebildeten Elementen eines Kupplungsteils 31 zusammenwirken. Diese Elemente des Kupplungsteils 31 springen vor und ragen in die Mitnahmeelemente 27b der Mitnahmescheibe 27. Auf der gegenüberliegenden Seite bilden diese Elemente des Kupplungsteils 31 Vertiefungen, in welche vorspringende Mitnahmeelemente 33c eines Drehteils 33 der Impulseinheit 32 eingreifen.

Das Kupplungsteil 31 besteht aus einem elastomeren Material, z.B. aus Silikon oder einem Kautschukelastomer.

Das Drehteil 33 der Impulseinheit 32 steht somit mit dem Antriebsmotor 15 über das Kupplungsteil 31 in drehfester Verbindung (abgesehen von der gewissen durch das Kupplungsteil 31 vermittelten Elastizität).

Bei einer Drehung des Rotors 24 des Antriebsmotors 15 wird das Drehteil 33 mitgenommen und dreht sich mit der gleichen Drehzahl um die Längsachse 2c.

Das Drehteil 33, der Rotor 24 und die Spindel 2 sind koaxial angeordnet und weisen somit die gleiche Längsachse 2c auf.

Der Rotor 24 des Antriebsmotors 15 und das Drehteil 33 der Impulseinheit 32 verschieben sich bei der Drehung der Spindel nicht in axialer Richtung der Längsachse 2c.

Das Drehteil 33 weist einen Aufnahmeraum 33a auf, welcher vom Deckel 33b verschlossen ist, der mittels Schrauben 34 mit dem Basisteil des Drehteils 33 verschraubt ist. Im Aufnahmeraum sind zwei Schlagteile 37 angeordnet. Die Schlagteile 37 sind zwischen Führungsstiften 36 angeordnet, die an gegenüberliegenden Seitenflächen des jeweiligen Schlagteils 37 im Bereich einer jeweiligen Vertiefung der Seitenfläche anliegen. Die Führungsstifte 36 sind in Sacklochbohrungen 33d des Basisteils und des Deckels 33b des Drehteils 33 eingesteckt.

Die Schlagteile 37 werden bei der Drehung des Drehteils 33 um die Längsachse 2c von den Führungsstiften 36 mitgenommen, wobei sie eine gewisse Verschwenkbarkeit gegenüber einem jeweiligen der Führungsstifte 36 aufweisen.

Die Schlagteile 37 weisen im Weiteren Öffnungen auf, die von der Spindel 2 durchsetzt sind. Die Konturen dieser Öffnungen weisen Schlagkanten 38 auf. Diese wirken mit einem Impulsaufnahmeteil 2b der Spindel 2 zusammen. Bei diesem Impulsaufnahmeteil 2b handelt es sich im Ausführungsbeispiel um einen an der Spindel 2 angeformten, nach außen vorspringen Schlagnocken.

Bei jeder Umdrehung des Drehteils 33 um die Längsachse 2c kommt es für ein jeweiliges der Schlagteile 37 zu einem Anlaufen der entsprechenden Schlagkante 38 an das Impulsaufnahmeteil 2b, worauf das Schlagteil 37 so gegenüber einem betreffenden der Führungsstifte 36 verschwenkt wird, dass die Schlagkante 38 außer Eingriff mit dem Impulsaufnahmeteil 2b gelangt und sich an diesem vorbeibewegen kann. Bei der weiteren Drehung des Drehteils 33 schwenkt sich das jeweilige Schlagteil 37 wieder zurück, sodass es bei der folgenden Umdrehung des Drehteils 33 wiederum zu einem Anlaufen der Schlagkante 38 an das Impulsaufnahmeteil 2b kommt.

Pro Umdrehung des Drehteils 33 werden im Ausführungsbeispiel also zwei Drehimpulse an die Spindel 2 übertragen.

Solche Schlagwerke sind grundsätzlich hinreichend bekannt, sodass sich eine weitere Detaillierung der Beschreibung erübrigt.

Durch die intermittierende Drehimpulsübertragung auf die Spindel 2 wird die Spindel 2 gedreht, wobei die Drehzahl der Spindel 2 wesentlich geringer als die des Drehteils 33 ist. Die Spindelmutter 9 wird somit axial verstellt und vom Spannelement 11 kann eine hohe Spannkraft aufgebracht werden.

Es könnte auch nur ein Schlagteil 37 im Aufnahmeraum 33a des Drehteils 33 angeordnet sein.

Anstelle der Einwirkung der Schlagteile 37 auf ein an die Spindel 2 angeformtes Impulsaufnahmeteil 2b (in Form eines Schlagnockens) könnte die Impulseinheit 32 auch ein eigenes Impulsaufnahmeteil aufweisen, welches mit der Spindel 2 in drehfester Verbindung steht.

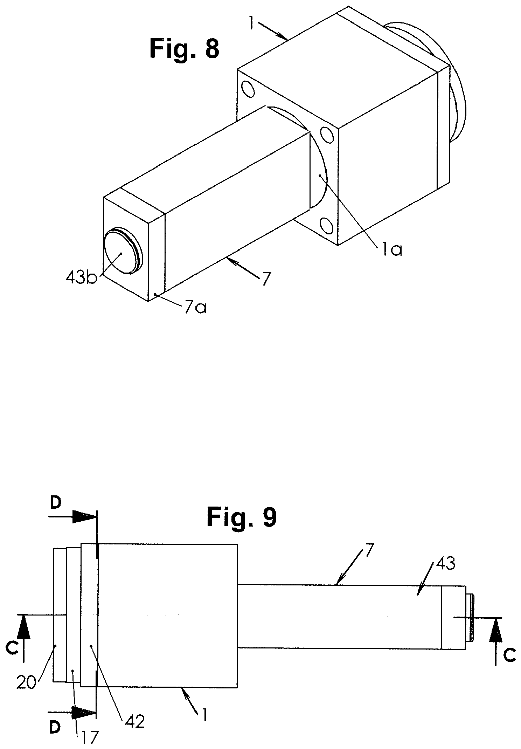

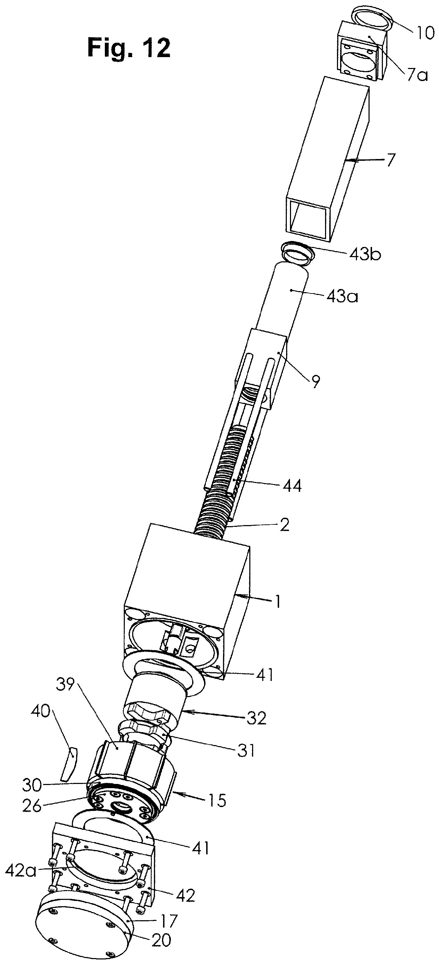

Ein zweites Ausführungsbeispiel der Erfindung ist in den Fig. 8 bis 12 dargestellt. Abgesehen von den im Folgenden beschriebenen Unterschieden entspricht die Ausbildung derjenigen des ersten Ausführungsbeispiels der Erfindung und die Beschreibung des ersten Ausführungsbeispiels kann insoweit analog herangezogen werden, zusammen mit den dort beschriebenen Modifikationen.

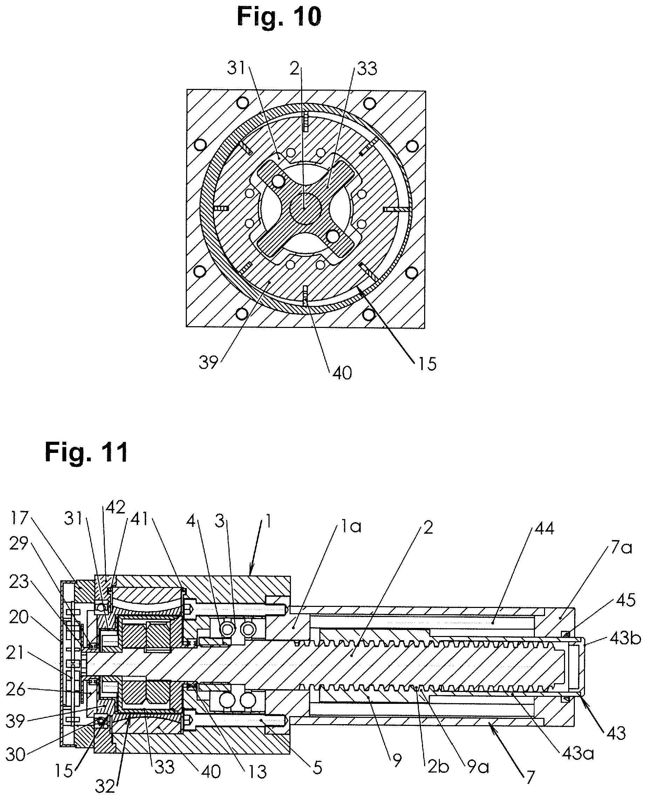

Ein Unterschied des zweiten Ausführungsbeispiels gegenüber dem ersten Ausführungsbeispiel besteht darin, dass anstelle eines Elektromotors ein pneumatischer Antriebsmotor 15 eingesetzt wird. Dieser weist als Rotor eine Pneumatikwelle 39 auf. Diese weist Dichtlamellen 40 auf, um die Pneumatikwelle 39 gegenüber der Wand des Aufnahmeraums abzudichten, in welcher diese angeordnet ist. Die Dichtlamellen 40 sind in Nuten der Pneumatikwelle radial verschiebbar (vgl. Fig. 10), wie dies bekannt ist.

Der Aufnahmeraum, in welchem die Pneumatikwelle 39 angeordnet ist und der in bekannter Weise eine von der Kreisform abweichende, etwas längliche (ovale) Querschnittskontur aufweist, wird im Ausführungsbeispiel direkt vom Lagergehäuse 1 gebildet. Dieses stellt also im Ausführungsbeispiel das Statorgehäuse des Pneumatikmotors dar. Ein separates, mit dem Lagergehäuse 1 verbundenes Statorgehäuse könnte aber vorgesehen sein.

Von einer Klemmscheibe 42 wird der Hohlraum im Lagergehäuse 1 geschlossen, wobei der Hohlraum beidseitig der Pneumatikwelle 39 von Dichtscheiben 41 abgedichtet ist.

Die Pneumatikwelle 39 ist als Hohlwelle ausgebildet und ist unter Zwischenschaltung der Lager 29, 30 (in analoger Weise wie der Magnettragring 28 im ersten Ausführungsbeispiel) zwischen der Klemmscheibe 26 und der Mitnahmescheibe 27 geklemmt, wobei die Klemmscheibe 26, die Mitnahmescheibe 27 und die Lager 29, 30 gleich wie im ersten Ausführungsbeispiel ausgebildet sind. Innerhalb der Pneumatikwelle 39 ist somit ein axial offener Hohlraum ausgebildet, innerhalb von dem die Impulseinheit 32 zumindest über einen Abschnitt ihrer axialen Erstreckung angeordnet ist. Die Impulseinheit 32 kann gleich wie im ersten Ausführungsbeispiel beschrieben ausgebildet sein.

Zwischen dem Außenring des Lagers 30 und der Pneumatikwelle 39 ist ein radial nach innen vorstehender Ringbund 42a der Klemmscheibe 42 angeordnet. Der Außenring des Lagers 30 wird zwischen diesem Ringbund 42a und einem an die Klemmscheibe 42 angeschraubten Klemmring 17 geklemmt.

Am Klemmring 17 ist der Deckel 20 angeschraubt, unterhalb von dem sich die Steuerelektronik 21 und die auf dem Ende der Spindel 2 angeordnete Sensorscheibe 23 befinden, in analoger Weise wie im ersten Ausführungsbeispiel.

Beim ersten Ausführungsbeispiel könnte anstelle des beschriebenen elektrischen Antriebsmotors auch ein pneumatischer Antriebsmotor analog dem zweiten Ausführungsbeispiel vorgesehen sein.

Die Spannvorrichtung gemäß diesem Ausführungsbeispiel könnte analog wie beim ersten Ausführungsbeispiel nach Art eines Schraubstocks ausgebildet sein, mit einer beweglichen Spannbacke des von der Spindelmutter 9 axial verstellbaren Spannelements, der eine feststehende Spannbacke gegenübersteht. Im Ausführungsbeispiel gezeigt ist aber eine andere Ausbildung des Spannelements 43, und zwar weist dieses eine von der Spindelmutter 9 axial abstehende Hülse 43a auf, die durch den Gehäusedeckel 7a tritt, wobei sie durch eine Dichtung 45 abgedichtet ist. Die Hülse 43a ist von einem Druckdeckel 43b verschlossen. Es wird insgesamt also ein stößelartiges Spannelement 43 ausgebildet, von welchem ein Werkstück gegen eine Spannfläche gespannt werden kann. Die Einsatzmöglichkeiten entsprechen also denjenigen eines, insbesondere hydraulischen, Spannzylinders.

Der Gehäusedeckel 7a kann durch Zuganker 44 verankert sein. Die Spindelmutter 9 ist vom Führungsgehäuse 7 verdrehgesichert.

Ein in dieser Art ausgebildetes Spannelement 43 könnte auch beim ersten Ausführungsbeispiel anstelle eines eine Spannbacke 11a aufweisenden Spannelements 11 eingesetzt werden.

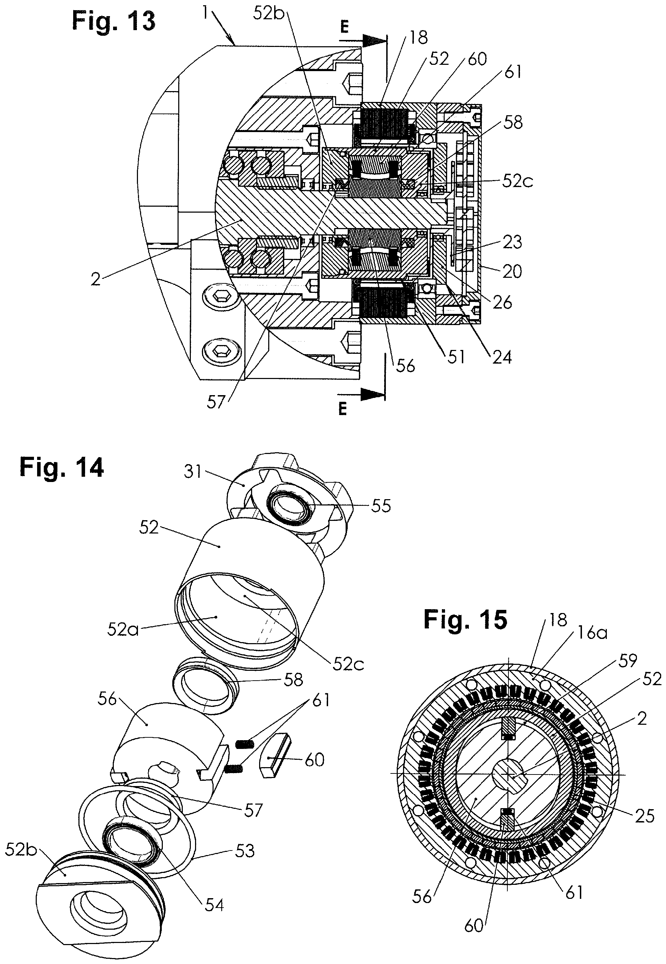

Ein drittes Ausführungsbeispiel der Erfindung ist in den Fig. 13-15 dargestellt. Die Ausbildung entspricht derjenigen des ersten Ausführungsbeispiels abgesehen von den im Folgenden beschriebenen Unterschieden und die Beschreibung des ersten Ausführungsbeispiels der Erfindung kann im Übrigen für das dritte Ausführungsbeispiel in analoger Weise herangezogen werden, zusammen mit den beschriebenen möglichen Modifikationen.

Im Unterschied zum ersten Ausführungsbeispiel der Erfindung ist anstelle eines Schlagwerks eine hydraulisch wirkende Impulseinheit 51 vorgesehen. Das vom Antriebsmotor 15 über das Kupplungsteil 31 kontinuierlich angetriebene Drehteil 52 weist ein Basisteil mit einem Aufnahmeraum 52a auf, der von einem Deckel 52b unter Zwischenschaltung eines Dichtrings 53 verschlossen ist. Das Drehteil 52 ist mittels Lager 54, 55 auf der Spindel 2 drehbar gelagert. Im Aufnahmeraum 52a des Drehteils 52 ist ein Impulsaufnahmeteil 56 angeordnet. Dieses ist gegenüber einem Boden 52c des Basisteils des Drehteils 52 und dem Deckel 52b des Drehteils 52 mittels Dichtungen 57, 58 abgedichtet.

Zwischen dem Drehteil 52 und dem Impulsaufnahmeteil 56 liegt ein Spaltraum 59. In diesem befindet sich eine Hydraulikflüssigkeit.

Wie dies von Impulsschraubern her bekannt ist, ist der Aufnahmeraum 52a des Drehteils 52 im Querschnitt gesehen (Fig. 15) nicht kreisförmig begrenzt sondern gegenüber der Kreisform in eine Richtung etwas längserstreckt (oval). Das Impulsaufnahmeteil 56 weist eine im Querschnitt kreisförmige Außenkontur auf. Über den Umfang des Impulsaufnahmeteils 56 bzw. des Spaltraums 59 ändert sich somit die Spaltbreite. An zwei gegenüberliegenden Stellen des Impulsaufnahmeteils 56 wird der Spalt zwischen dem Impulsaufnahmeteil 56 und dem Drehteil 52 jeweils durch ein leistenförmiges Trennelement 60 überbrückt, welches in einer axialen Nut der Außenwand des Impulsaufnahmeteils 56 angeordnet und in diesem radial verschiebbar ist. Die Trennelemente 60 können wie dargestellt von Federn 61 an die Innenfläche des Drehteils 52 angedrückt sein. Das Impulsaufnahmeteil 56 ist durch die Trennelemente 60 somit an diesen gegenüberliegenden Stellen gegenüber dem Drehteil 52 zumindest weitgehend abgedichtet. Zwischen den durch die Trennelemente 60 abgetrennten Teilräumen besteht an den Trennelementen 60 vorbei und/oder durch Kanäle, welche durch das Impulsaufnahmeteil 56 verlaufen, eine beschränkte Durchflussmöglichkeit.

Bei einer Drehung des Drehteils 52 wird die im Spaltraum 59 sich befindende Hydraulikflüssigkeit somit, wenn das jeweilige Dichtelement 60 das Ende des oval ausgebuchteten Bereichs des Aufnahmeraums 52a des Drehteils 52 erreicht, jeweils druckbeaufschlagt, wodurch ein Drehimpuls auf das Impulsaufnahmeteil 56 übertragen wird.

Im Ausführungsbeispiel wird pro Umdrehung zweimal ein Drehimpuls übertragen, wobei bei einer größeren oder kleineren Anzahl von Trennelementen 60 und einer entsprechenden Ausbildung des Spaltraums auch eine größere oder kleinere Anzahl von Drehimpulsen pro Umdrehung übertragen werden könnte.

Bei einer solchen hydraulischen Impulseinheit könnten auch die Funktionen des Drehteils 52 und Impulsaufnahmeteile 56 vertauscht sein, d.h. das Impulsteil 56 könnte vom Antriebsmotor angetrieben werden und somit das Drehteil darstellen und der Drehimpuls könnte auf das Teil 52 übertragen werden, welches dann das Impulsaufnahmeteil darstellen würde und drehfest mit der Spindel 2 verbunden wäre.

Anstelle eines elektrischen Antriebsmotors könnte auch bei diesem Ausführungsbeispiel ein pneumatischer Antriebsmotor eingesetzt werden, beispielsweise wie anhand des zweiten Ausführungsbeispiels beschrieben.

Das Spannelement kann bei diesem dritten Ausführungsbeispiel beispielsweise analog wie beim ersten Ausführungsbeispiel oder analog wie beim zweiten Ausführungsbeispiel ausgebildet sein.

Unterschiedliche weitere Modifikationen der Erfindung sind denkbar und möglich, ohne den Bereich der Erfindung zu verlassen.

Beispielsweise könnte das Kupplungsteil 31 auch entfallen, insbesondere wenn die Impulseinheit 32 hydraulisch wirkt (da dann die auftretenden Impulse geringere Spitzen aufweisen).

### Legende

### Zu den Hinweisziffern

| | | | |
|---|---|---|---|
| 1 | Lagergehäuse | 28 | Magnettragring |
| 1a | Deckel | 28a | Absatz |
| 1b | Spannbacke | 29 | Lager |
| 1c | Boden | 30 | Lager |
| 2 | Spindel | 31 | Kupplungsteil |
| 2a | Gewinde | 32 | Impulseinheit |
| 2b | Impulsaufnahmeteil | 33 | Drehteil |
| 2c | Längsachse | 33a | Aufnahmeraum |
| 3 | Schub-Drucklager | 33b | Deckel |
| 4 | Fixiermutter | 33c | Mitnahmeelement |
| 5 | Schraube | 33d | Sacklochbohrung |
| 6 | Dichtung | 34 | Schraube |
| 7 | Führungsgehäuse | 36 | Führungsstift |
| 7a | Gehäusedeckel | 37 | Schlagteil |
| 8 | Schraube | 38 | Schlagkante |
| 9 | Spindelmutter | 39 | Pneumatikwelle |
| 9a | Gewinde | 40 | Dichtlamelle |
| 9b | Flansch | 41 | Dichtscheibe |
| 10 | Lager | 42 | Klemmscheibe |
| 11 | Spannelement | 42a | Ringbund |
| 11a | Spannbacke | 43 | Spannelement |
| 12 | Schraube | 43a | Hülse |
| 13 | Lager | 43b | Druckdeckel |
| 14 | Schraube | 44 | Zuganker |
| 15 | Antriebsmotor | 45 | Dichtung |
| 16 | Stator | 50 | Werkstück |
| 16a | Statorblech | 51 | Impulseinheit |
| 16b | Statorwicklung | 52 | Drehteil |
| 17 | Klemmring | 52a | Aufnahmeraum |
| 18 | Statorgehäuse | 52b | Deckel |
| 18a | Ansatz | 52c | Boden |
| 19 | Schraube | 53 | Dichtring |
| 20 | Deckel | 54 | Lager |
| 21 | Steuerelektronik | 55 | Lager |
| 22 | Schraube | 56 | Impulsaufnahmeteil |
| 23 | Sensorscheibe | 57 | Dichtung |
| 24 | Rotor | 58 | Dichtung |
| 25 | Permanentmagnet | 59 | Spaltraum |
| 26 | Klemmscheibe | 60 | Trennelement |
| 27 | Mitnahmescheibe | 61 | Feder |
| 27a | Ringbund | | |
| 27b | Mitnahmeelement | | |

## Patentansprüche

1. Spannvorrichtung zum Einspannen eines Werkstücks (50), umfassend eine drehbar und axial unverschiebbar gelagerte Spindel (2) mit einem ein Gewinde (2a) aufweisenden Gewindeabschnitt, einen einen Rotor (24) aufweisenden Antriebsmotor (25) zum Drehen der Spindel (2), und eine mit dem Gewinde (2a) der Spindel (2) zusammenwirkende, unverdrehbare gehaltene Spindelmutter (9), wobei durch Drehung der Spindel (2) ein mit der Spindelmutter (9) verbundenes oder an die Spindelmutter (9) angeformtes Spannelement (11, 43) zum Einspannen des Werkstücks (50) verstellbar ist,
wobei die Spannvorrichtung eine Impulseinheit (32, 51) mit einem Drehteil (33, 52) aufweist, welches mit dem Rotor (24) des Antriebsmotors (15) mechanisch gekoppelt ist, wobei zur Drehung der Spindel (2) von der Impulseinheit (32, 51) pro Umdrehung des Drehteils (33, 52) zumindest einmal ein Drehimpuls auf die Spindel (2) übertragbar ist.

2. Spannvorrichtung nach Anspruch 1, **dadurch gekennzeichnet, dass** der Rotor (24) des Antriebsmotors (15), das Drehteil (33, 52) der Impulseinheit (32, 51) und die Spindel (2) koaxial angeordnet sind.

3. Spannvorrichtung nach Anspruch 1 oder 2, **dadurch gekennzeichnet, dass** der Rotor (24) des Antriebsmotors (15) mit dem Drehteil (33, 52) der Impulseinheit (32, 51) über ein Kupplungsteil (31) aus einem elastomeren Material verbunden ist.

4. Spannvorrichtung nach einem der Ansprüche 1 bis 3, **dadurch gekennzeichnet, dass** der Rotor (24) des Antriebsmotors (15) einen axial in Richtung zur Spindelmutter (9) offenen Hohlraum aufweist, in welchem die Impulseinheit (32, 51) zumindest über einen Abschnitt ihrer axialen Erstreckung aufgenommen ist.

5. Spannvorrichtung nach einem der Ansprüche 1 bis 4, **dadurch gekennzeichnet, dass** die Impulseinheit (32) ein Schlagwerk ist, welches zumindest ein Schlagteil (37) aufweist, von dem pro Umdrehung des Drehteils (33) zumindest ein Schlag auf ein an der Spindel (2) angeformtes oder mit der Spindel (2) drehfest verbundenes Impulsaufnahmeteil (2b) ausübbar ist.

6. Spannvorrichtung nach Anspruch 5, **dadurch gekennzeichnet, dass** das Impulsaufnahmeteil (2b) ein an der Spindel angeformter Schlagnocken ist.

7. Spannvorrichtung nach einem der Ansprüche 1 bis 4, **dadurch gekennzeichnet, dass** die Impulseinheit (51) zwischen dem Drehteil (52) und dem Impulsaufnahmeteil (56) einen Spaltraum (59) aufweist, in welchem sich eine Hydraulikflüssigkeit befindet, wobei sich die Spaltbreite zwischen dem Drehteil (52) und dem Impulsaufnahmeteil (56) über den Umfang des Spaltraums (59) ändert.

8. Spannvorrichtung nach einem der Ansprüche 1 bis 7, **dadurch gekennzeichnet, dass** der Antriebsmotor (15) ein bürstenloser Motor, vorzugsweise Innenläufermotor ist, wobei der Rotor (24) Permanentmagneten (25) aufweist.

9. Spannvorrichtung nach Anspruch 8, **dadurch gekennzeichnet, dass** die Permanentmagneten (25) von einem Magnettragring (28) getragen sind, der an seiner inneren Oberfläche in einem axialen Randbereich einen radial nach innen vorspringenden Absatz (28a) aufweist, der mittels einer Klemmscheibe (26) gegen einen radial nach außen abstehenden Ringbund (27a) einer Mitnahmescheibe (27) gezogen ist, wobei die Mitnahmescheibe (27) Mitnahmeelemente (27b) zur Übertragung der Drehung der Mitnahmescheibe (27) auf das Drehteil (33, 52) der Impulseinheit (32, 51) aufweist.

10. Spannvorrichtung nach einem der Ansprüche 1 bis 9, **dadurch gekennzeichnet, dass** zur Erfassung der Drehung der Spindel (2) eine drehfest mit der Spindel (2) verbundene Sensorscheibe (23) vorgesehen ist.

11. Spannvorrichtung nach einem der Ansprüche 1 bis 10, **dadurch gekennzeichnet, dass** die Spannvorrichtung nach Art eines Schraubstocks mit einer beweglichen und einer feststehenden Spannbacke (11a, 1b) ausgebildet ist, zwischen denen das Werkstück (15) einspannbar ist, wobei das mit der Spindelmutter (9) verbundene oder an die Spindelmutter (9) angeformte Spannelement (11) die bewegliche Spannbacke (11a) aufweist.

12. Spannvorrichtung nach Anspruch 11, **dadurch gekennzeichnet, dass** die feststehende Spannbacke (1b) am Lagergehäuse (1) angeformt ist.

13. Spannvorrichtung nach einem der Ansprüche 1 bis 10, **dadurch gekennzeichnet, dass** das Spannelement (43) stößelartig ausgebildet ist, wobei mit dem Spannelement (43) ein Werkstück gegen eine Spannfläche spannbar ist.

14. Spannvorrichtung nach Anspruch 13, **dadurch gekennzeichnet, dass** das stößelartige Spannelement (43) eine von der Spindelmutter (9) axial abstehende, am freien Ende geschlossene Hülse (43a) aufweist.

## Claims

1. A clamping device for clamping a workpiece (50), comprising a rotatably and axially non-displaceably mounted spindle (2) with a threaded portion having a thread (2a), a drive motor (25) having a rotor (24) for rotating the spindle (2), and a non-rotatably held spindle nut (9) which co-operates with the thread (2a) of the spindle (2), wherein by rotation of the spindle (2) there is adjustable a clamping element (11, 43) for clamping the workpiece (50), the clamping element being connected with the spindle nut (9) or formed on the spindle nut (9),
wherein the clamping device has a pulse unit (32, 51) with a rotary part (33, 52), which is mechanically coupled with the rotor (24) of the drive motor (15), wherein for rotating the spindle (2) by the pulse unit (32, 51) there is transmittable a rotary pulse to the spindle (2) at least once per rotation of the rotary part (33, 52).

2. A clamping device according to claim 1, **characterised in that** the rotor (24) of the drive motor (15), the rotary part (33, 52) of the pulse unit (32, 51) and the spindle (2) are arranged coaxially.

3. A clamping device according to claim 1 or 2, **characterised in that** the rotor (24) of the drive motor (15) is connected to the rotary part (33, 52) of the pulse unit (32, 51) by means of a coupling part (31) of an elastomeric material.

4. A clamping device according to any one of claims 1 to 3, **characterised in that** the rotor (24) of the drive motor (15) has an axial space open in the direction of the spindle nut (9), in which space the pulse unit (32, 51) is received at least over a portion of its axial extent.

5. A clamping device according to any one of claims 1 to 4, **characterised in that** the pulse unit (32) is an impact mechanism, which has at least one striking part (37), by means of which, for each rotation of the rotary part (33), there is a exertable at least one impact on a pulse receiving part (2b) formed on the spindle (2) or non-rotatably connected to the spindle (2).

6. A clamping device according to claim 5, **characterised in that** the pulse receiving part (2b) is an impact projection formed on the spindle.

7. A clamping device according to any one of claims 1 to 4, **characterised in that** the pulse unit (51) has a gap (59) between the rotary part (52) and the pulse receiving part (56), in which gap there is a hydraulic fluid, wherein the gap width between the rotary part (52) and pulse receiving part (56) varies over the extent of the gap (59).

8. A clamping device according to any one of claims 1 to 7, **characterised in that** the drive motor (15) is a brushless motor, preferably an internal rotor motor, wherein the rotor (24) has permanent magnets (25).

9. A clamping device according to claim 8, **characterised in that** the permanent magnets (25) are carried by a magnet carrying ring (28), which at its inner surface in an axial edge region has a radially inwardly projecting shoulder (28a), which by means of a clamping plate (26) is drawn against a radially outwardly protruding annular collar (27a) of a drive plate (27), wherein the drive plate (27) has drive elements (27b) for transmitting the rotation of the drive plate (27) to the rotary part (33, 52) of the pulse unit (32, 51).

10. A clamping device according to any one of claims 1 to 9, **characterised in that** for detecting the rotation of the spindle (2) there is provided a sensor plate (23) non-rotatably connected with the spindle (2).

11. A clamping device according to any one of claims 1 to 10, **characterised in that** the clamping device is configured in the manner of a vice with one movable and stationary clamping jaw (11a, 1b), between which the workpiece (15) is clampable, wherein the clamping element (11) connected to the spindle nut (9) or formed on the spindle nut (9) has the movable clamping jaw (11a).

12. A clamping device according to claim 11, **characterised in that** the fixed clamping jaw (1b) is formed on the bearing housing (1).

13. A clamping device according to any one of claims 1 to 10, **characterised in that** the clamping element (43) is configured as a plunger, wherein a workpiece is clampable against a clamping surface by the clamping element (43).

14. A clamping device according to claim 13, **characterised in that** the plunger-like clamping element (43) has a sleeve (43a) which protrudes axially from the spindle nut (9) and is closed at its free end.

## Revendications

1. Dispositif de serrage pour le serrage d'une pièce à usiner (50), comprenant une broche (2) logée de manière rotative et immobile axialement avec une section de filet présentant un filet (2a), un moteur d'entraînement (25) présentant un rotor (24) pour la rotation de la broche (2), et un écrou de broche (9) coagissant avec le filet (2a) de la broche (2), maintenu de manière non rotative, dans lequel un élément de serrage (11, 43) relié à l'écrou de broche (9) ou formé au niveau de l'écrou de broche (9) pour le serrage de la pièce à usiner (50) est réglable par rotation de la broche (2),
dans lequel le dispositif de serrage présente une unité d'impulsion (32, 51) avec une partie rotative (33, 52) qui est mécaniquement couplée au rotor (24) du moteur d'entraînement (15), dans lequel une impulsion de rotation peut être transmise au moins une fois à la broche (2) pour la rotation de la broche (2) de l'unité d'impulsion (32, 51) par tour de la partie rotative (33, 52).

2. Dispositif de serrage selon la revendication 1, **caractérisé en ce que** le rotor (24) du moteur d'entraînement (15), la partie rotative (33, 52) de l'unité d'impulsion (32, 51) et la broche (2) sont agencées de manière coaxiale.

3. Dispositif de serrage selon la revendication 1 ou 2, **caractérisé en ce que** le rotor (24) du moteur d'entraînement (15) est relié à la partie rotative (33, 52) de l'unité d'impulsion (32, 51) par le biais d'une partie de couplage (31) en un matériau élastomère.

4. Dispositif de serrage selon l'une quelconque des revendications 1 à 3, **caractérisé en ce que** le rotor (24) du moteur d'entraînement (15) présente un espace creux ouvert axialement en direction de l'écrou de broche (9), dans lequel l'unité d'impulsion (32, 51) est reçue au moins sur une section de son étendue axiale.

5. Dispositif de serrage selon l'une quelconque des revendications 1 à 4, **caractérisé en ce que** l'unité d'impulsion (32) est un mécanisme de percussion qui présente au moins une partie de percussion (37), par laquelle par tour de la partie rotative (33), au moins un coup peut être exercé sur une partie de réception d'impulsion (2b) reliée sans pouvoir tourner à la broche (2) ou formée au niveau de la broche (2).

6. Dispositif de serrage selon la revendication 5, **caractérisé en ce que** la partie de réception d'impulsion (2b) est une came de percussion formée au niveau de la broche.

7. Dispositif de serrage selon l'une quelconque des revendications 1 à 4, **caractérisé en ce que** l'unité d'impulsion (51) présente entre la partie rotative (52) et la partie de réception d'impulsion (56) un espace de fente (59), dans lequel se trouve un liquide hydraulique, dans lequel la largeur de fente se modifie entre la partie rotative (52) et la partie de réception d'impulsion (56) sur la périphérie de l'espace de fente (59).

8. Dispositif de serrage selon l'une quelconque des revendications 1 à 7, **caractérisé en ce que** le moteur d'entraînement (15) est un moteur sans balai, de préférence un moteur à rotor interne, dans lequel le rotor (24) présente des aimants permanents (25).

9. Dispositif de serrage selon la revendication 8, **caractérisé en ce que** les aimants permanents (25) sont portés par un anneau porteur magnétique (28) qui présente au niveau de sa surface intérieure dans une zone de bord axiale un épaulement (28a) en saillie radialement vers l'intérieur qui est tiré au moyen d'un disque de serrage (26) contre un collet annulaire (27a) dépassant radialement vers l'extérieur d'un disque d'entraînement (27), dans lequel le disque d'entraînement (27) présente des éléments d'entraînement (27b) pour la transmission de la rotation du disque d'entraînement (27) à la partie rotative (33, 52) de l'unité d'impulsion (32, 51).

10. Dispositif de serrage selon l'une quelconque des revendications 1 à 9, **caractérisé en ce qu'**un disque de capteur (23) relié sans pouvoir tourner à la broche (2) est prévu pour la détection de la rotation de la broche (2).

11. Dispositif de serrage selon l'une quelconque des revendications 1 à 10, **caractérisé en ce que** le dispositif de serrage est réalisé comme un étau avec une mâchoire de serrage (11a, 1b) mobile et une mâchoire de serrage fixe, entre lesquelles la pièce à usiner (15) peut être serrée, dans lequel l'élément de serrage (11) formé au niveau de l'écrou de broche (9) ou relié à l'écrou de broche (9) présente la mâchoire de serrage (11a) mobile.

12. Dispositif de serrage selon la revendication 11, **caractérisé en ce que** la mâchoire de serrage (1b) fixe est formée au niveau du logement de palier (1).

13. Dispositif de serrage selon l'une quelconque des revendications 1 à 10, **caractérisé en ce que** l'élément de serrage (43) est réalisé comme un coulisseau, dans lequel une pièce à usiner peut être serrée contre une surface de serrage avec l'élément de serrage (43).

14. Dispositif de serrage selon la revendication 13, **caractérisé en ce que** l'élément de serrage (43) en coulisseau présente une douille (43a) fermée à l'extrémité libre, dépassant axialement de l'écrou de broche (9).
